# EUROPEAN PATENT APPLICATION

(11) **EP 1 536 395 A1**
(43) Date of publication of application: **01.06.2005**
(21) Application number: 03721020.0
(22) Date of filing: 01.05.2003
(51) Int. Cl.: G09B 23/30

(54) **THREE-DIMENSIONAL MODEL**

(30) Priority: 10.05.2002 JP 2002173404; 31.01.2003 JP 2003025312
(71) Applicant: Nagoya Industrial Science Research Institute, Nagoya-shi, Aichi 460-0008 (JP)
(72) Inventor: FUKUDA, Toshio, Higashi-ku Nagoya-shi, Aichi 461-0042 (JP); ARAI, Fumihito, Chikusa-ku Nagoya-shi, Aichi 464-0852 (JP); IKEDA, Seiichi, Okayama 708-1125 (JP); NEGORO, Makoto, Chikusa-ku Nagoya-shi, Aichi 464-0029 (JP)
(74) Representative: Steinecke, Peter, Dr.
(86) International application number: PCT/JP2003/005590
(87) International publication number: WO 2003/096308

(57) **Abstract**

A three-dimensional model, wherein coelom models such as blood vessels are stackingly molded based on tomogram data on a subject, the peripheries of the coelom models are surrounded by a three-dimensional model forming material, the three-dimensional model forming material is hardened, and the coelom models are fused or molten and removed, whereby a specified three-dimensional model can be formed.

## Description

### TECHNICAL FIELD

The present invention relates to a three-dimensional model. More particularly, it relates to a three-dimensional model replicating body cavities such as blood vessels of a subject.

### BACKGROUND ART

A three-dimensional silicone rubber model replicating cerebral blood vessels is known as University of Geneva Model. This cerebral blood vessels model replicates cerebral blood vessels as cavities in a transparent silicone rubber rectangular parallelepiped, and the cavities are linked to the surface of the model and open at the surface. To this opening, a pump with pulsatile flow is connected and liquid is allowed to flow, whereby it is possible to simulate lesions such as cerebral aneurysm, dural arteriovenous malformation, angiostenosis, etc. in vitro. Furthermore, it is possible to make practices for inserting a catheter or embolus materials into the cerebral blood vessel through the opening.

This cerebral blood vessels model is produced based on dead bodies, and so the shapes of the cavities corresponding to the cerebral blood vessels are fixed readymade.

Meanwhile, a method of producing a three-dimensional living body model based on tomogram data of a subject obtained by a CT scanner, etc. is described in, for example, JPH05 (1993)-11689A, JPH08 (1996)-18374B, JPH06 (1994)-13805U, JP2002-40928A, JP2001-5377A, etc.

According to such methods, based on a plurality of tomographic data taken with a tomographic device at equal intervals, a three-dimensional model having the same shapes as those of targeted organs is formed by stereolithography. Therefore, order-made three-dimensional models including internal shapes thereof of any sites can be formed when sufficient tomographic data of the sites can be obtained.

### DISCLOSURE OF THE INVENTION

The present inventors have investigated in order to produce an order-made cerebral blood vessels model as mentioned above, and they have thought that the methods of producing a three-dimensional model based on tomogram data introduced in the above-mentioned patent documents could be applicable.

Consequently, when the present inventors have tried to make a cerebral blood vessels model in accordance with the production method, they have encountered the following problems.

When cerebral blood vessels models are used in vitro in the medical field, the models are required to have high transparency, and elasticity and flexibility similar to those of living tissues. However, any materials used for performing optical shaping and other laminate shaping methods used in the above-mentioned production method cannot satisfy such requirements.

Furthermore, when shaping volume of the three-dimensional model is increased or the shaping accuracy becomes high, the time required for laminate shaping is dramatically increased. Therefore, much time is needed to laminate shape a cerebral blood vessels model required in the medical field by a conventional production method. Thus, the cost for producing models is increased, and sometimes the model production cannot respond to an urgent need.

The present inventors have earnestly investigated in order to solve at least one of the above-mentioned problems, and they have reached the present invention mentioned below:

A production method of a three-dimensional model, the method comprising the steps of:
laminate shaping a body cavity model such as blood vessels model based on tomogram data of a subject;
surrounding the peripheries of the body cavity model by a three-dimensional model molding material and hardening the three-dimensional model molding material; and
removing the body cavity model.

According to this invention, in the step of laminate shaping, since regions such as blood vessels (body cavity model) having relatively small volume are formed, time for laminate shaping can be shortened.

Furthermore, since a material portion of the three-dimensional model is formed by surrounding the laminate shaped body cavity model by the three-dimensional model molding material, by arbitrarily selecting the three-dimensional model molding material, a three-dimensional model that can satisfy requirements of the medical field can be formed. For example, by using silicone rubber, it is possible to form a cerebral blood vessels model (three-dimensional modeD which is transparent and has elasticity and flexibility similar to those of living body.

### BRIEF DESCRIPTION OF THE DRAWINGS

Fig. 1 is a perspective view showing a body cavity model that was laminate shaped in one Example of the present invention.
Fig. 2 is a perspective view showing guide portions added to the body cavity model.
Fig. 3 is a perspective view showing a three-dimensional model according to one Example.
Fig. 4 shows a three-dimensional model according to another Example.
Fig. 5 shows a sign added to the three-dimensional model according to another Example.
Fig. 6 is a perspective view showing a medical model according to one Example of the present invention.
Fig. 7 shows an embodiment of using the same medical model.
Fig. 8 is a perspective view showing a three-dimensional model according to another Example.
Fig. 9 is a perspective view showing a three-dimensional model according to a further Example.

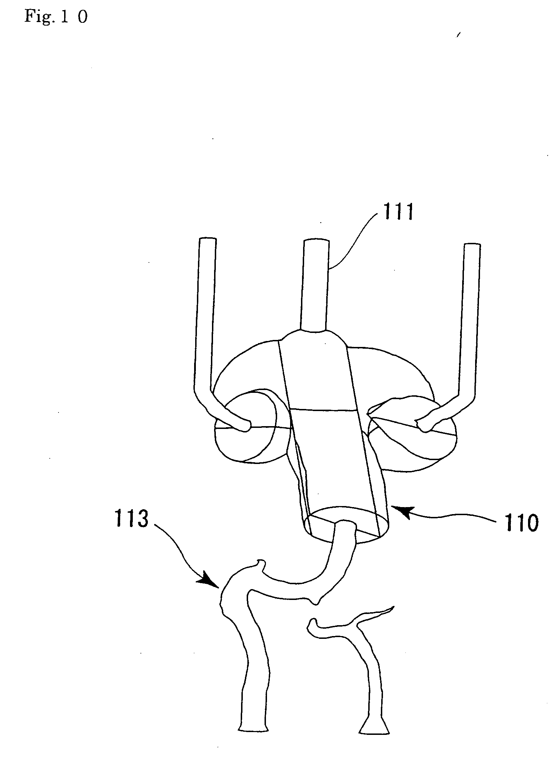

Fig. 10 is a schematic view showing a method of producing the three dimensional model of Fig. 9.

### BEST MODE OF CARRYING OUT THE INVENTION

Hereinafter, each element of the present invention will be explained in detail.

### (Tomogram data of subject)

A subject may be entire or a part of a human body, but an animal or a plant may be a target of tomography. Furthermore, it does not mean that dead bodies are excluded.

The tomogram data refer to basic data in carrying out the laminate shaping. In general, three-dimensional shape data are constructed from tomographic data obtained by an X-ray CT scanner, an MRI imaging device, an ultrasonic device, and the like, and the three-dimensional shape data are resolved into two-dimensional data to obtain tomogram data.

Hereinafter, one example of generating tomogram data will be explained.

Herein, a case where a plurality of two-dimensional images taken in equal intervals while moving in parallel to the body axis direction are used as input data (tomographic data) is explained, however, three-dimensional shape data of cavities can be also obtained by carrying out the same processing even in a case where two-dimensional images or three-dimensional images obtained by other imaging methods are used as input images. Firstly, each of the input two-dimensional images is exactly laminated based on the image-taking intervals at the time of tomography. Then, on each two-dimensional image, by specifying threshold values as to image concentration values, only cavity regions targeting the body cavity model are extracted from each two-dimensional image, meanwhile other regions are removed from the laminated two-dimensional images. Thus, three-dimensional shapes of portions corresponding to cavity regions are provided as a shape in which two-dimensional images are laminated. The contours of these two-dimensional images are interpolated three-dimensionally to reconstruct a three-dimensional curved surface. Thereby, three-dimensional shape data of the targeted cavities are generated. Note here that in this case, by specifying the threshold value as to the concentration value. firstly the regions of cavities are extracted from the input image. However, besides this method, by specifying the specific concentration value giving the surfaces of the cavities, the surfaces of the cavities are extracted from the input image and interpolate three-dimensionally, whereby it is possible to generate three-dimensional curved surface directly. Furthermore, after extracting the regions by specifying the threshold value (or extracting the surfaces by specifying the specific concentration value), input images may be laminated. Furthermore, generation of a three-dimensional curved surface may be carried out by polygon approximation.

Note here that the three-dimensional shape data may be modified or altered during or after generation of the three-dimensional shape data. Examples of shape modification or alteration may include adding any structures that do not exist in tomographic data, adding a supporting structure called a support, removing a part of the structures in the tomographic data, or altering shapes of cavities, or the like. Thereby, it is possible to modify or alter the shapes of cavities formed inside the three-dimensional model freely. Furthermore, it is also possible to provide a non-laminate shaped region inside of cavities. As mentioned below, in a case where a body cavity model in which the inside presents a hollow structure and a non-laminate shaped region is provided, three-dimensional shape data in which such a non-laminate shaped region is provided in the cavities is generated. Note here that such processing may be carried out by a laminate shaping system or software corresponding to the laminate shaping system.

Next, the generated three-dimensional shape data of cavities are converted into a format corresponding to the laminate shaping system to be used for laminate shaping of the body cavity model if necessary, and sent to the laminate shaping system or the software corresponding to the laminate shaping system to be used.

In the laminate shaping system (or the software corresponding to the laminate shaping system), at the same time of setting various kinds of items such as arrangement or laminating direction of the body cavity model at the time of laminate shaping, for the purpose of maintaining the shape during the laminate shaping, supports (supporting structures) are added to portions that need supports (it is not necessary to add them unless necessary). Finally, by slicing the thus obtained shaped data based on the shaped thickness at the time of laminate shaping, sliced data (tomogram data) directly used for laminate shaping are generated. Note here that on the contrary to the above-mentioned procedure, supports may be added after generating slice data. Furthermore, when sliced data are automatically generated by a laminate shaping system to be used (or software corresponding to the laminate shaping system), this procedure may be omitted. However, also in this case, setting of the thickness of laminate shaping may be carried out. The same is true to the addition of supports, and when the support is automatically generated by the laminate shaping system (or software corresponding to the laminate shaping system), the sliced data need not to be generated manually (may be generated manually).

In the above-mentioned examples, three-dimensional shape data are constructed from tomographic data. However, also in a case where three-dimensional shape data are given as data from the first, by resolving the three-dimensional shape data into two-dimensional data and thus tomogram data to be used in the following laminate shaping step may be obtained.

In the image processing, it is possible to collect or add living body information.

The living body information herein denote shapes or positions of living body tissue such as eye-balls, nose, bones, etc., or direction (orientation) thereof. Such living body information can be obtained by forming the shape of the three-dimensional data of the living body tissues and subjecting them to image processing. That is to say, when the image processing of the tomographic data (two-dimensional image) is carried out to construct three-dimensional shape data and further to form tomographic data, data as to body cavities such as blood vessels and data as to the other living body information such as eyeballs may be included. Such living body information may be added manually by an operator when three-dimensional data are formed.

The present invention targets the body cavity such as blood vessels. The body cavity herein refers to body cavities existing in various organs (skeletons, muscles, circulatory organs, respiratory organs, digestive organs, urogenital organs, endocrine organs, nerves, sense organs, etc.), as well as body cavities configured by geometry of various organs or body walls. Therefore, lumen of organs such as heart lumen, stomach lumen, intestine lumen, uterus lumen, blood vessel lumen, lumen of urinary tract, etc. and oral cavity, nasal cavity, fauces, middle ear cavity, body cavity, articular cavity, pericardial cavity, etc. are included in "body cavity".

### (Laminate shaping)

Laminate shaping denotes obtaining a desired shape by sequentially repeating formation of thin layers based on tomogram data.

The laminate shaped body cavity model is surrounded by a three-dimensional model shaping material and then must be decomposed and removed therefrom. In order to facilitate removing, it is preferable that a material used for laminate shaping are a material with a low melting point or materials that easily dissolve in a solvent. As such materials, thermosetting resin with a low melting point, or wax etc. may be used. Also, stereolithography resin generally used in a so-called stereolithography method (included in laminate shaping) can be used if easily decomposed.

The body cavity model can be made thin, in which the inside thereof has a hollow structure as long as it has a strength that is resistant to an external force such as pressure added from the outside when it is surrounded by the three-dimensional model molding material. Thus, it is possible not only to reduce time used for laminate shaping and the cost accompanied with shaping but also to simplify the elution of the body cavity model in the later elution step.

Examples of specific laminate shaping methods include a powder sintering method, a fused resin ejection method, a fused resin extrusion method, etc.

In laminate shaping by a powder sintering method, by scanning a powder material laid flatly with a beam for heating such as laser based on tomogram data, a powdery surface is melted and powders are bonded to each other so as to form a thin layer of sintered powder. At the same time, this thin layer is bonded to the lower layer of thin membrane that was already sintered. Next, a new thin layer of powder is supplied onto the upper surface again. By repeating such steps, a laminate shaping method, in which layers of sintered powder subsequently formed and laminated, is carried out. Thus, laminate shaping of the body cavity model was carried out.

In the fused resin ejection type laminate shaping, while scanning a nozzle head on a surface based on tomogram data, melted shaping materials are ejected or dipped from a nozzle and deposited and fixed to form thin layers. Such layers are subsequently formed and laminated. With such a laminate shaping method, laminate shaping of the body cavity model is carried out.

In the fused resin extrusion, type laminate shaping, while a shaping material is extruded from a thin nozzle in a way in which the materials are drawn and this linear material is fed out and fixed, the nozzle head is scanned on the surface based on the tomogram data, so that thin layers are formed. The formed thin layers are laminated. With such a laminate shaping method, laminate shaping of the body cavity model is carried out.

Note here that to the body cavity model produced by laminate shaping, after laminate shaping, various workings (removing working and addition working) such as addition of surface polishing or surface coating can be added, whereby it is possible to modify or alter the shape of the body cavity model. When a support necessary to be removed after laminate shaping is added as a part of such workings, support is removed.

Coating the surface of the body cavity model with other materials makes it possible to prevent a part or entire components of the body cavity model material from diffusing into the three-dimensional model molding materials. In addition to the above, also by physically treating (thermal treatment, high frequency treatment, etc.) or chemically treating the surface of the body cavity model, such diffusion can be prevented.

It is preferable that by surface treating the body cavity model, level difference on the surface is smoothed. Thus, the surface of the lumen of the three-dimensional model becomes smooth, and inner surface of the body cavities such as blood vessels can be replicated more realistically. Examples of surface treating methods include: bringing the surface of the body cavity model with a solvent; melting the surface by heating; coating; and the combination thereof.

As mentioned above, when living body information is obtained, it is preferable that a sign displaying the living body information together with the body cavity model is formed. This is advantageous because the increase in number of production man-hour is suppressed.

### (Formation of three-dimensional model)

A three-dimensional model is produced by surrounding a part or entire of a body cavity model by a three-dimensional model molding material, hardening the material and then removing the body cavity model. That is to say, the body cavity model is used as a lost model for, so-called, lost wax in the later step. The lost model for lost wax denotes a model used in a precise casting technique called a lost wax casting technique. In this technique, the periphery of this model is coated with particulate refractory or ceramics refractory to be hardened, followed by removing this model by melting. This technique is used for the purpose of producing a mold for a cast product having the same shape as that of the lost model. However, in the present invention, the body cavity model produced by the laminate molding is not used for the purpose of the above-mentioned cast production, but used for the purpose of producing the three-dimensional model having a void having the same shape and structure as those of the targeted cavity by filling an entire periphery or a specific portion of the periphery with three-dimensional model molding material, hardening the three-dimensional model molding material so as to produce the three-dimensional model, and then removing only the body cavity model existing inside the three-dimensional model.

The three-dimensional model molding materials are appropriately selected in accordance with the application of use of the model. For example, besides elastomer or gel such as silicone rubber (silicone elastomer, silicone gel) and thermosetting polyurethane elastomer, etc., thermosetting resin such as silicone resin, epoxy resin, polyurethane, unsaturated polyester, phenol resin, urea resin, etc., and thermoplastic resin such as polymethylmethacrylate can be used alone or in combination thereof. The method for hardening these materials depends upon the well-known method.

When the target of the three-dimensional model is a cerebral blood vessel model, it is preferable that materials have high transparency, and elasticity and flexibility similar to those of living tissues. Examples of such materials include silicone rubber (silicone elastomer or silicone gel). Furthermore, since silicon rubber has a contact property similar to that of the living tissue, it is suitable for simulating inserting a medical instrument such as a catheter.

The three-dimensional model molding material can be formed of a plurality of layers. For example, the periphery of the cavity may be formed of a material having the property (elasticity, flexibility, etc.) being more similar to those of the living tissue, and the outer periphery may be formed of a material having durability.

The outer shape of the three-dimensional model can be arbitrarily formed. For example, when the periphery of the body cavity model is filled with molding materials, an outer mold having a desired shape, which was prepared in advance, may be used (the inside of the outer mold is filled with the body cavity model and molding materials). However, the three-dimensional model may be formed (dipping molding and slash molding) without using an outer mold by attaching sol or powdery molding materials onto the surface of the body cavity model and hardening thereof. When the outer mold is used, it is desirable that materials with low affinity to the molding materials to be used are employed in preparation for removing the outer mold afterward. However, the outer mold may not be removed and a part of a finally obtained three-dimensional model.

Note here that when the outer shape of the three-dimensional model is molded by the use of an outer mold, it is possible to replicate the cavities and the outer shape of the organs including the cavities, etc. by matching the shape of the molding surface of the outer mold to the outer shape of the organs including the targeted cavities.

The outer shape of the three-dimensional model is not necessary to be matched to the outer shape of the organs including the targeted cavities and it may be replaced with the other shape (for example, cube shape, etc.). For example, when the three-dimensional model is produced by using molding materials having transparency, by providing the outer shape of the three-dimensional model with a flat surface, recognition property of the cavities replicated in the three-dimensional model can be improved. The flat surface herein includes a curved surface or a convex and concave surface within a scope that does not substantially affect the recognition of the cavities. Furthermore, by using the flat surface as a lower surface, the placement stability of the three-dimensional model is improved.

Furthermore, with respect to the outer shape of the three-dimensional model, after it is formed by hardening a molding material, various kinds of removing workings and addition workings may be carried out, whereby it is possible to smooth or add modification or alteration to the shape.

A body cavity model replicating blood vessels specifies the cavity of the three-dimensional model. In order to insert a catheter, etc. into this cavity, the end of the body cavity model is extended out to the surface of the three-dimensional model, so that the end of the cavity opens at the three-dimensional model.

Depending upon the configuration of the body cavity model, the end of the cavities may not be extended out to the surface of the three-dimensional model. In this case, however, columnar guide portions may be extended from the ends of the body cavity model and extended out to the surface of the three-dimensional model. Furthermore, a hole may be penetrated from the surface of the three-dimensional model to the end of the body cavity model embedded in the three-dimensional model after the three-dimensional model is formed.

The three-dimensional model can be formed without using a mold. For example, the three-dimensional model molding materials are formed on the surface of the body cavity model as a membrane. When the body cavity model (which is solid) replicates blood vessels, if the body cavity model is removed from the membranous three-dimensional model, a hollow model of the blood vessels is produced.

A part of the body cavity model is surrounded by a three-dimensional model molding material as a membrane, and the rest part can be surrounded to a larger thickness with a three-dimensional modeling material by using a mold.

Herein, block shaped three-dimensional model using a mold cannot replicate the dynamic behavior of the body cavities such as blood vessels, etc. On the other hand, a membranous three-dimensional model can replicate the dynamic behavior of the body cavities such as blood vessels, etc. substantially faithfully. However, since the membranous three-dimensional model itself cannot maintain the shape, handling is difficult. Therefore, it is preferable that a part of the block shaped three-dimensional model is formed as a membrane. For example, a void portion is provided in the block-shaped three-dimensional model and the body cavity such as blood vessels, etc. positioned in the void portion can be formed as a membrane. For example, in a cerebral blood vessel model, the void portion is allowed to correspond to the subarchnoid space and the blood vessels that need observation or simulation of a catheter operation is allowed to exist in the subarchnoid space. Thus, at the time of observation, the dynamic behavior of the blood vessels can be replicated realistically, and in a catheter operation, more realistic simulation can be carried out.

When a sign displaying living body information is formed together with the body cavity model, a part or entire of this sign is surrounded by the three-dimensional model molding material. For example, when the sign and body cavity model are formed of the same materials and when it is not preferable that the sign is removed together with the body cavity model, the sign may be completely covered with the three-dimensional model forming materials.

### (Removing body cavity model)

The body cavity model embedded in the three-dimensional model molding material as a core is removed after the three-dimensional model molding materials are hardened. The removing method is appropriately selected in accordance with shaping materials of the body cavity model, and it is not particularly limited as long as the method does not affect the three-dimensional model.

As the method of removing the body cavity model, (a) a heat melting method of melting by heating; (b) a solvent melting method of melting by a solvent; and (c) a hybrid method combining melting by heating and melting by a solvent, etc. can be employed. By these methods, the body cavity model is removed by selectively fluidizing and eluting out the body cavity model to the outside of the three-dimensional model.

In a material used for laminate shaping a body cavity model and the three-dimensional model molding material, the following limiting conditions, which are related to each other, are imposed depending upon the methods to be used among the above-mentioned heat melting method, solvent melting method or hybrid method.
(1) When a body cavity model is eluted by the heat melting method, both of the following limiting conditions (1-1) and (1-2) are necessary to be satisfied.
   (1-1) A body cavity model shaping material is melted by heating.
   (1-2) A three-dimensional model molding material can be hardened at temperatures lower than the melting temperature of the shaping material described in the limiting conditions (1-1) and has a heat-resistant temperature higher than the melting temperature of the shaping material described in the limiting condition (1-1) after it is hardened.
      In this heat melting method, by heating at the temperature which is higher than the melting temperature of the body cavity model shaping material and lower than the heat-resistant temperature of the three-dimensional model molding material, a body cavity model in the three-dimensional model is selectively melted and fluidized. Before elution, the body cavity model is in a state which is integrated with the three-dimensional model or with the outer mold depending upon the order of removing the outer mold. However, when both of the above-mentioned limiting conditions (1-1) and (1-2) are satisfied, by heating entire or a part of the structure by a heater, etc., the body cavity model can be selectively melted. Note here that heating of the three-dimensional model can be carried out from the outside of the three-dimensional model, however, heating can be carried out from the inside by arranging a heating electrode inside the three-dimensional model or laminate shaped model, or by irradiation with laser or high frequency wave, etc. from the outside. Then, in this state, the body cavity model is eluted to the outside of the three-dimensional model and removed. At the time of eluting this body cavity model, a remote force such as gravity or a centrifugal force, or inertia generated by giving impact or vibration can be used. However, by applying external pressure (positive pressure, negative pressure) to the portion where the body cavity model is exposed, or allowing other liquid to flow into the inside of the cavity, elution can be promoted. Furthermore, the body cavity model inside the three-dimensional model (in particular, a part of the body cavity model residing inside the three-dimensional model after elution) may be discharged to the outside of the three-dimensional model by directly applying an external force or applying impact or vibration or directly grasping, and the like. At this time, the body cavity model inside the three-dimensional model may be decomposed into plural parts.
      As the body cavity model shaping material capable of applying this heat melting method, various kinds of thermoplastic resin (thermoplastic) (resin with high fluidity at the time of melting (low viscosity at the time of melting) is preferred) or wax (fat and oil, or paraffin, etc.), or low melting point metal, ice (water) and other materials can be used as long as they are melted at lower temperature than the heat resistant temperature of the molding materials to be used for forming a three-dimensional model. Note here that these shaping materials are required to be selected in accordance with the properties of the molding materials used of the three-dimensional model (molding materials may be selected in accordance with the properties of shaping materials).
(2) When the body cavity model is eluted by the solvent melting method, both of the following limiting conditions (2-1) and (2-2) are necessary to be satisfied.
   (2-1) A body cavity model shaping material is dissolved in a solvent (such a solvent exists).
   (2-2) A three-dimensional model molding material has solvent resistant property with respect to at least one kind of solvent among the solvents described in the limitation conditions (2-1) (hereinafter, which will be referred to as "specific solvent").
      The solvent melting method is a method in which the body cavity model existing in the three-dimensional model is selectively dissolved and fluidized by a solvent and eluted from the inside of the three-dimensional model and removed. The method is applicable only when both of the above-mentioned limitation conditions (2-1) and (2-2) are satisfied.
      In the solvent melting method, by using the specific solvent provided by the above-mentioned limiting conditions (2-2), the body cavity model inside the three-dimensional model is selectively dissolved and fluidized. Before elution, the body cavity model is in a state which is integrated with the three-dimensional model and with an outer mold depending upon the order of removing the outer mold. However, when both of the above-mentioned limiting conditions (2-1) and (2-2) are satisfied, by bringing entire structure or a portion where the body cavity model is exposed into contact with a solvent, the body cavity model can be selectively dissolved. Then, in this state, the body cavity model is removed by eluting it out of the three-dimensional model. At the time of eluting this body cavity model, a remote force such as gravity or a centrifugal force, etc. or inertia generated by giving impact or vibration can be used. Moreover, by applying external pressure (positive pressure, negative pressure) to the portion where the body cavity model is exposed, or allowing other liquid to flow into the inside of the cavity, elution can be promoted. Furthermore, the body cavity model inside the three-dimensional model (in particular, a part of the body cavity model residing ins the three-dimensional model after elution) may be discharged to the outside of the three-dimensional model, in a solid phase, by directly applying an external force or applying impact or vibration or directly grasping and the like. At this time, the body cavity model inside the three-dimensional model may be disintegrated into plural parts.
      As the body cavity model shaping material capable of applying this heat melting method, adhesive material such as cyanoacrylate (dissolved in acetone) or starch (dissolved in water, etc.), and the like; various kinds of resins with soluble material dissolving property such as toluenesulfonamide resin (dissolved in acetone), polyvinyl alcohol (dissolved in water, etc), and the like; and wax (fat and oil, paraffin etc.) can be used. Note here that when the solvent melting method is carried out, a molding material to be used for the three-dimensional model is necessary to have solvent resistance property to a solvent to be used for melting the body cavity model. The shaping material to be used in the body cavity model may be selected in accordance with the properties of the molding material to be used for the three-dimensional model (the molding material may be selected in accordance with the properties of the shaping material).
      Furthermore, according to the investigation by the present inventors, it could be confirmed that in the three-dimensional model, when a portion where the body cavity model was extended out was dipped in a solvent bath, the body cavity model was melted due to osmotic pressure, and at the same time, the solvent was sucked into the inside the body cavity model, and even a body cavity model located upper from the solvent interface was melted sequentially. In this case, it has been confirmed that the same is true in the case where entire body cavity model other than the portion extending out to the three-dimensional model is embedded in the three-dimensional model.
(3) When a body cavity model is eluted by a hybrid method, the both of the following limiting conditions (3-1) and (3-2) are necessary to be satisfied.
   (3-1) A body cavity model shaping material is melted by heating and dissolved in a solvent (such a solvent exists).
   (3-2) A three-dimensional model molding material can be hardened at temperatures lower than the melting temperature of the shaping materials described in the limiting conditions (3-1) and after hardened, the three-dimensional model molding material has a heat-resistant temperature higher than the melting temperature of the shaping material described in the limiting condition (3-1) and has a solvent resistance property to at least one kind of solvent (specific solvents) in the solvents described in the limiting condition (3-1).

The hybrid method is a method for eluting the body cavity model existing in the three-dimensional model from the inside of the three-dimensional model and removing thereof by using the combination of the heat melting method and solvent melting method described above. The method is applicable only when both of the above-mentioned limitation conditions (3-1) and (3-2) are satisfied. Heating method and dissolving method of the body cavity model by the hybrid method can be carried out by arbitrarily combining the methods described in the above-mentioned heat melting method and solvent dissolving method.

For example, in this hybrid method, (1) a step of eluting a body cavity model from the inside of a three-dimensional model by heating; and (2) a step of eluting the body cavity model from the inside of the three-dimensional model by a solvent, are carried out in an arbitrary order (or by carrying out plural times of steps in an arbitrary order). Thereby the body cavity model is removed from the inside of the three-dimensional model.

In the hybrid method, the above-mentioned steps can be carried out in an arbitrary order and a plurality of times if necessary. For example, by melting and fluidizing the body cavity model by heating, almost all of the body cavity model is eluted from the inside of the three-dimensional model. After cooling the three-dimensional model to room temperature, by infusing the specific solvent provided by the above-mentioned limiting condition (3-2) into a void region of the inside of the three-dimensional model formed by the above-mentioned elution, a part of the body cavity model residing in the three-dimensional model due to the surface tension, etc. is fluidized again and the body cavity model can be eluted to the outside of the three-dimensional model together with the infused solvent.

As the body cavity model shaping material capable of applying this hybrid method, materials capable of applying both the heat melting method and the solvent dissolving method can be used, and thermoplastic resin (thermoplastic) such as toluenesulfonamide resin and a wax (fat and oil, or paraffin, etc.) can be used.

According to the heat melting method or hybrid method in which the body cavity model is melted by heating, regardless of the exposed area of the body cavity model, it is possible to melt and fluidize the entire laminate shaping model without contact accompanied by the thermal diffusion into the inside of the three-dimensional model. This method enables easily replicating a complicated shape in which it is difficult to elute the body cavity model in a case where the body cavity model is gradually melted from the contact region by bringing the body cavity model into contact with a solvent. For example, it is possible to replicate a thin tube cavity with high aspect ratio.

In the above-mention, the methods of eluting the body cavity model from the inside of the three-dimensional model by heat melting method, a solvent melting method and a hybrid method were described. However, besides such methods, by directly giving an external force to the body cavity model from the exposed portion, or by giving an impact or vibration, etc. from the outside of the three-dimensional model, or by directly grabbing, and the like, the body cavity model can be removed from the inside of the three-dimensional model. Furthermore, at this time, the body cavity model inside the three-dimensional model can be divided into plural parts of the body cavity model and each of the divided parts may be taken out from the inside of the three-dimensional model. Note here that, when the body cavity model is removed by this method, by producing the body cavity model with the inside made hollow, it is possible to facilitate the decomposition of the body cavity model.

A three-dimensional model replicating cavity inside thereof can be obtained as a three-dimensional model replicating entire cavity that is a target of the three-dimensional model by dividing the cavity that is a target of the three-dimensional model into a plurality of portions; then subjecting each of the divided portions to the production method of the present invention; and fabricating the obtained three-dimensional models of the respective cavities. In this case, it is possible to produce the three-dimensional models of the respective cavities by respective different production methods. The present invention also relates to three-dimensional models of a plurality of respective divided portions and methods for producing the same.

### (Step of removing diffusion)

According to the investigation by the present inventors, it was revealed that depending upon the selections of a body cavity model shaping materials and a three-dimensional model molding materials or the molding conditions of the three-dimensional model or removing conditions of the body cavity models, entire or a part of materials of the body cavity model were diffused into the three-dimensional model molding material. Such diffusion causes fogging of the periphery of the cavity of the three-dimensional model and lowers the recognition property.

It is therefore one of the objects of the present invention to remove the diffused materials of the body cavity model from the three-dimensional model.

When the three-dimensional model is particularly formed of a material having elasticity, for example, silicone rubber, etc., when the body cavity model is melted by heating in the elution step, a part of the shaping materials of the body cavity model may diffuse into the inside of the three-dimensional model, which may cause fogging, etc. in the three-dimensional model.

It is thought that this fogging occurs because shaping material components are vaporized (evaporated) and diffuse into the inside of the three-dimensional model when the body cavity model is melted by heating. In many cases (excluding the case in which diffused components are chemically bonded to the component materials of the three-dimensional model, etc), the diffused components residing inside the three-dimensional model after the body cavity model is eluted can be vaporized (evaporated) again by heating the three-dimensional model again. Since a part of the diffused components vaporized inside the three-dimensional model are discharged from the three-dimensional model to the outside of the three-dimensional model by diffusion, and thereby it is possible to remove the diffused components from the inside of the three-dimensional model. Furthermore, a part or sometimes entire of the diffused components vaporized inside three-dimensional model are precipitated to the surface of the three-dimensional model by cooling, and thereby the diffusing components can be removed from the inside of three-dimensional model. In the diffusion removing step, by using these methods, the diffused components are removed from the inside of the three-dimensional model. Note here that when the crosslinked polymer such as elastomer is used as a molding material, by selecting and using materials with high crosslinking density, the effect of diffusion removing by these methods can be enhanced.

Furthermore, diffusion components inside the three-dimensional model, in particular, pigments, etc. can be often decomposed by heating. Thereby, it is possible to remove fogging occurring by diffusion or to change colors. However, heating of the three-dimensional model is necessary to be carried out at temperatures lower than the heat-resistant temperature of the materials constituting the three-dimensional model. This method can be applied only in the case where decomposition of the diffusion components within the range of the temperatures is possible.

The diffusion removing step may be carried out after removing the body cavity model or during removing thereof. Furthermore, it may be carried out during removing and after removing.

### (Sign of living body information)

In the present invention directed to an order-made three-dimensional model, the corresponding relationship between replicated body cavities such as blood vessels and other living tissues, direction of a subject, and other living body information are often required.

Since tomogram data include living body information in addition to information on the body cavities such blood vessels, other living body information can be extracted from these data. For example, from the tomogram data, a three-dimensional image including other living body information is formed, by comparing the three-dimensional model with this image by a visual inspection, a sign indicating the living body information can be formed on the surface or inside of the three-dimensional model. For example, as living body information, the direction of a subject may be described on the surface of the three-dimensional model by means of literatures or marks indicating up/down and right/left. Besides, together with or apart from the living body information, description of the specific information of the tomogram data (name of a person subjected to tomography, date of tomography, a hospital where tomography is carried out, conditions for tomography , etc.) may be described.

The sign can be formed together with the body cavity model by analyzing tomogram data as mentioned above. When the body cavity model is laminate shaped, by forming the sign together and removing it later, a part of the shape of the sign can be remained in the three-dimensional model or embedded in the three-dimensional model. Furthermore, the sign is discharged to the outside together with the body cavity model, and then colored silicone rubber, etc. is infused into the formed void portion to make it a sign.

When such a sign is one indicating the direction (orientation) of a subject, a cube on the surface of which a mark or literature showing the direction of a subject is described, arrow, and a miniature of a subject can be employed.

As the living body information, in the three-dimensional model, it is possible to change colors of the portions corresponding to living tissues (bone tissue, eyeball, etc.) other than the body cavity such as blood vessels, etc. Furthermore, the living tissue may be a cavity. In addition, the shape of the living tissue can be made separatable from the three-dimensional model. Furthermore, the outer shell of the living tissue can be drawn in the three-dimensional model.

### (Medical model)

At first, the present inventors produced a rectangular parallelepiped three-dimensional model. In this case, it was not possible to visually recognize the state of the cavity (that is, shape of blood vessels) from the edge portion exactly.

Then, in order to eliminate the edge from the three-dimensional model, the model was made to be spherical shape. However, in the spherical shaped model, entire part serves as lens, making it difficult to visually recognize the shape of the cavity.

It is an object of the present invention to solve such problems of the three-dimensional model and provide a model excellent in visual recognition.

In order to solve such problems, the present inventors have earnestly investigated, and then reached the present invention mentioned below. That is to say, the three-dimensional model is dipped in a translucent liquid having substantially an equal refractive index to the three-dimensional model molding material.

Thus, since a three-dimensional model is visually integrated with a translucent fluid, even if the three-dimensional model has an edge portion and the three-dimensional model has a curved surface, if a viewing surface (observation surface) of the translucent fluid is flat, the observation of cavities is not affected by the structure of the model. Herein, the flat surface may include a curved surface and/or convex and concave portions in which observation is not substantially affected.

That is to say, a translucent fluid is filled in a case (box), and entire or a part of the three-dimensional model is dipped therein. Then, by moving the three-dimensional model, a site that requires observation in the three-dimensional model is directed to the observation surface (flat surface) of the case. Even if an edge is present in the direction of the site that requires observation, the edge is eliminated by the translucent fluid and clear observation is possible on the observation surface of the case.

Hereinafter, Examples of the present invention will be described.

### (First Example)

In order to obtain three-dimensional data regarding the shapes of cerebral blood vessels and affected parts, i.e., cerebral arteries to be targets of a three-dimensional model, a head portion of a patient was imaged with a helical scanning X-ray CT scanner having spatial resolution of 0.35 × 0.35 × 0.5 mm while administering contrast media into the blood vessels of the region to be imaged. The three-dimensional data obtained by imaging were reconstructed into 500 pieces of 256-gradation two-dimensional images (tomographic data) having a resolution of 512 × 512 which were arranged in equal intervals along the body axis so that they are passed to a three-dimensional CAD software, and then image data corresponding to respective two-dimensional images are stored in a 5.25-inch magneto-optical disk by a drive incorporated in the X-ray CT scanner in the order according to the imaging direction.

Then, by a 5.25-inch magneto-optical drive externally connected to a personal computer, the image data are taken into a storage device in the computer. From these image data, three-dimensional data having a STL format (format in which a three-dimensional curved surface is represented as an assembly of triangle patches), which are necessary for laminate shaping, were generated by using a commercially available three-dimensional CAD software. In this conversion, by laminating input two-dimensional images based on the imaging intervals, a scalar field having concentration value as a scalar amount is constructed and specific concentration value giving the inner surface of the blood vessels is specified on the scalar field, and thereby three-dimensional data of lumen of blood vessel lumens are constructed as an isosurface (boundary surface of specific scalar value). Then, rendering approximating to triangle polygon is carried out with respect to the constructed isosurface.

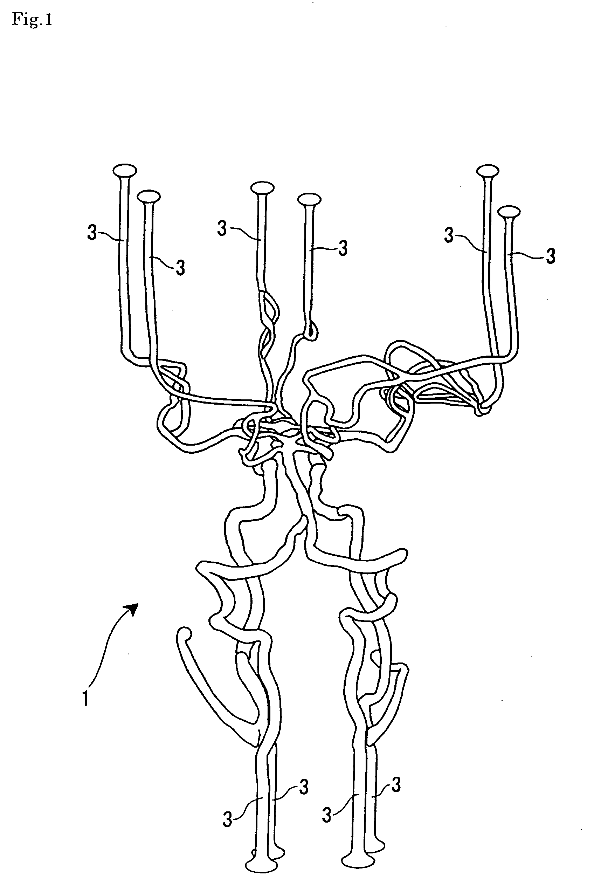

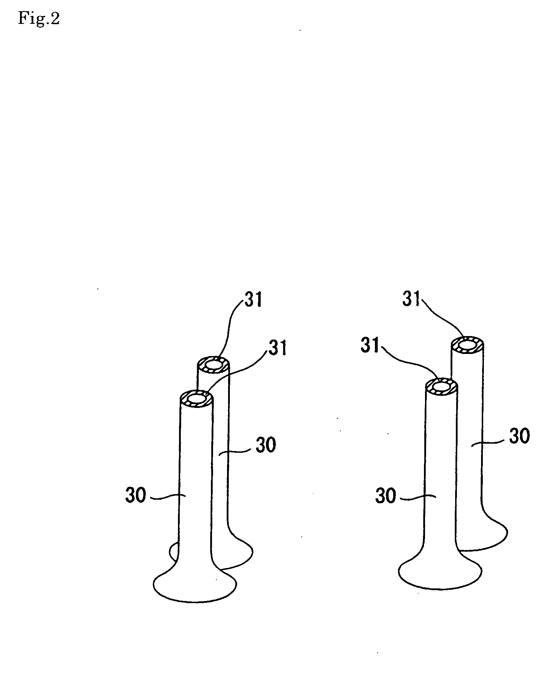

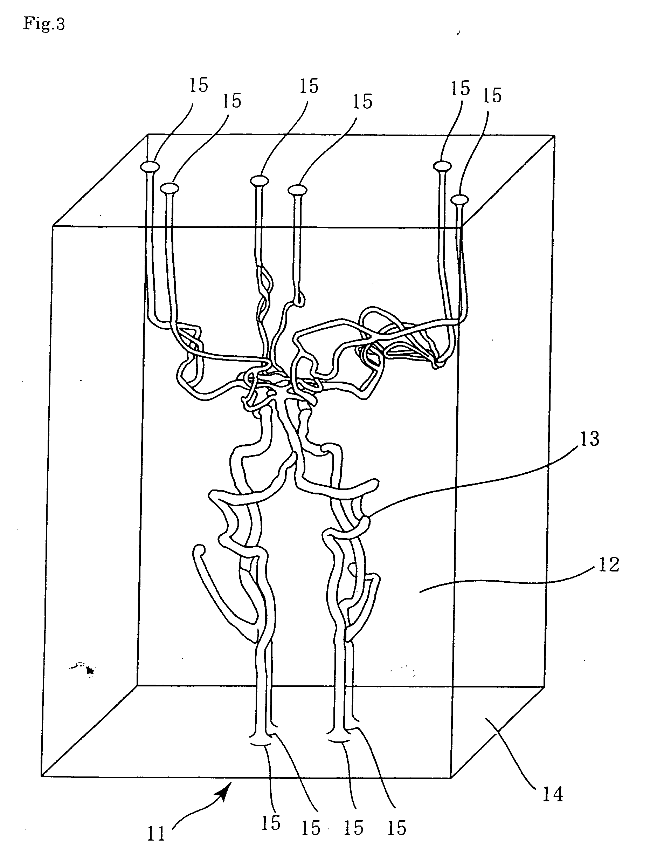

Note here that additional data are added to the three-dimensional data in this stage and guide portions 3 are expanded and protruded from the end of the body cavity model (see Fig. 1). This guide portion 3 is a hollow columnar member as shown in Fig. 2. By providing a hollow portion 31, the time required for laminate shaping is shortened. A tip portion of this guide portion 3 has a large diameter and this portion is extended out to the surface of the three-dimensional model to form a large diameter opening 15 (see Fig. 3).

The generated three-dimensional shape data having an STL format are then transferred to a fused resin ejection type laminate shaping system, and arrangement, laminating direction and laminating thickness of a model in the shaping system are determined and at the same time, a support is added to the model.

The thus generated data for laminate shaping were sliced to the laminate shaping thickness (13 µm) to generate a large number of slice data. Then, based on each of the thus obtained slice data, a shaping material (melting point: about 100°C, easily dissolved in acetone) containing p-toluensulfonamide and p-ethylbenzene sulfonamide as main components was melted by heating and allowed to eject. Thereby, a resin hardened layer with specified thickness having a shape corresponding to each of the slice data was laminate molded on a one-by-one basis. Thus, laminate shaping was carried out. By removing a support after the last layer was formed, a laminate shaping model (body cavity model) 1 of a region of cerebral blood vessel lumens was formed.

Furthermore, this body cavity model 1 was dipped in a water bath of 80°C for 30 minutes. Thus, the surface of the body model 1 was decomposed and smoothed.

Meanwhile, an outer mold to be used for the purpose of molding an outer shape of a three-dimensional model was produced by machining. The internal molding surface of the outer mold has a cube shape. Members constituting the outer mold can be assembled and disassembled. By arranging the body cavity model 1 inside the outer mold for casting, and thereafter by attaching the end of the model to the internal surface of the outer mold so as to fix the both each other.

Into the inside of the thus formed mold, a liquid type silicone elastomer in which two liquids are mixed, which are obtained by mixing two liquids and can be polymerized by heating for a short time, was poured and polymerization-hardened by heating at 75°C in an incubator for one hour. Thus, the three-dimensional model 11 shown in Fig. 3 was formed. After it was confirmed that sufficient hardening was obtained, members constituting the outer mold were sequentially disassembled and removed.

By heating the thus obtained rectangular parallelepiped three-dimensional model 11 in an incubator at 120°C for one hour, the body cavity model 1 existing inside the three-dimensional model 11 was melted and eluted to the outside of the three-dimensional model 11. Note here that this elusion was carried out from the portion (an opening portion 15) where the end of the body cavity model 1 was exposed from the three-dimensional model 11. After elution of the shaping material by heat melting, an entire block was cooled to room temperature, and acetone was filled into a void portion formed inside the three-dimensional model 11 by the elusion of the laminate shaping model. Thus, the body cavity model shaping material residing inside the three-dimensional model 11 was dissolved and a solution of shaping material was eluted to the outside of the three-dimensional model. Thus, the body cavity model 1 was completely removed from the inside of the three-dimensional model 11. Thus, the three-dimensional model 11 replicating the cerebral blood vessel lumens 13 was obtained.

Finally, in order to eliminate shaping material components diffusing into a material portion 12 in the three-dimensional model 11 during melting of the body cavity model 1, the three-dimensional model 11 was heated in an incubator set to 120°C for one hour again, and the components were removed by evaporation.

The thus formed three-dimensional model 11 having cerebral blood vessel lumens 13 had high transparency because highly transparent silicone elastomer was used as the shaping material. Furthermore, since the outer shape was made to be a rectangular parallelepiped and a flat surface 14 was provided, the shape or structure of the cerebral blood vessel lumens 13 and the shape of cerebral aneurysm replicating the affected site, which are replicated inside the three-dimensional model 11, can be recognized by visual inspection easily and exactly. Furthermore, when a lubricant is poured, the formed three-dimensional model of the cerebral blood vessels provides feeling against the insertion similar to an actual surgical operation of cerebral blood vessels when catheter that is a medical instrument was inserted.

### (Second Example)

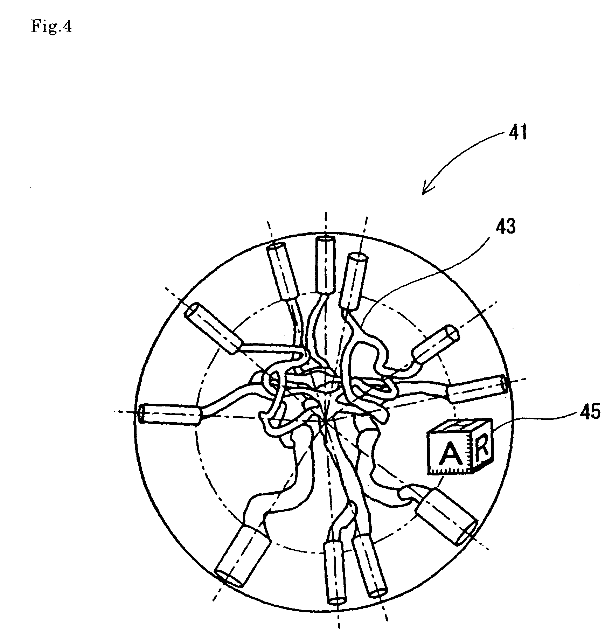

A three-dimensional model 41 of this Example has a spherical shape and has cerebral blood vessel lumens 43 (see Fig. 4). A production method and a molding material of this three-dimensional model 41 is the same as in the First Example except of the shape of the outer mold.

In the three-dimensional model 41 of this Example, a cubical-shaped sign 45 is embedded inside. On each surface of this sign 45, the direction of a patient's face is described. Since the spherical shaped three-dimensional model 41 is not stable in location, by providing such a sign 45, the orientation of the cerebral blood vessel lumens 43 can be exactly grasped.

The direction shown by such a sign 45 is specified by computer processing from the location of eyeball and bone tissues extracted from tomogram data. This sign 45 and the body cavity model are simultaneously laminate shaped so that they are arranged in a specific direction. Since this sign 45 is embedded in the three-dimensional model 41, it is not disassembled in the step of removing the body cavity model. It is possible for an operator to form the sign 45 by manual.

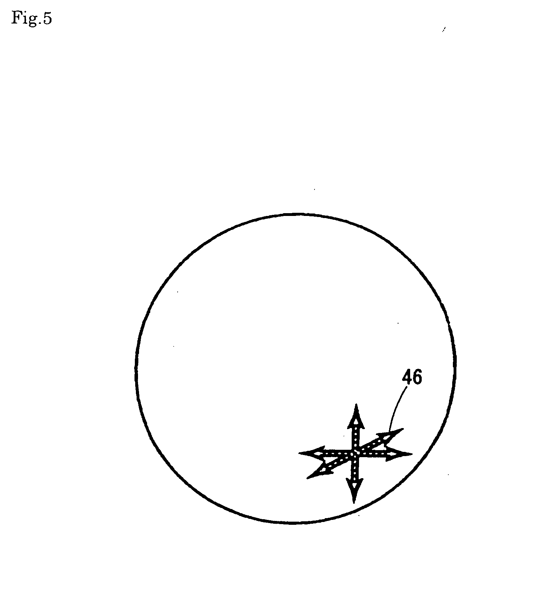

Fig. 5 shows a sign 46 according to another embodiment. This sign 46 shows the direction by arrows. By providing arrows with variation of colors or size, specific directions can be represented. For example, when the right side is shown in green, left side is shown in red, and upper side is shown in black, if the three-dimensional model is rotated, the orientation of the cerebral blood vessel lumens can be specified.

### (Third Example)

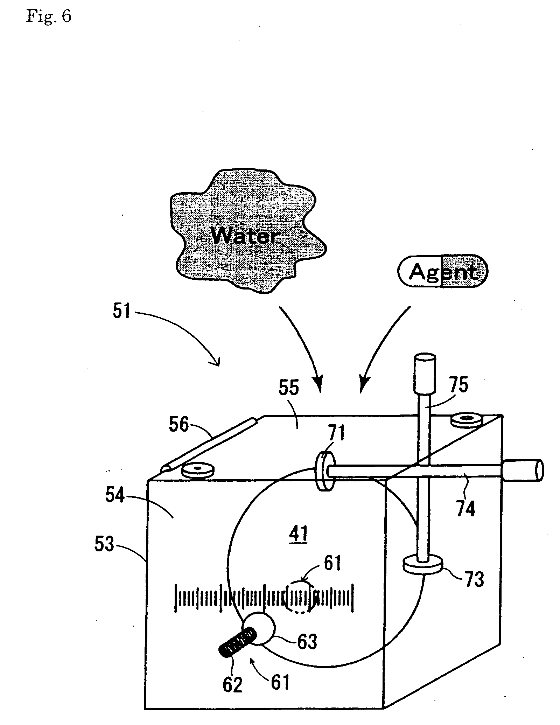

Fig. 6 introduces a medical model 51 of this Example. This medical model 51 includes a spherical shaped three-dimensional model 41 described in Example 2, a case 53 and a translucent fluid 54 filled in the case 53.

The entire structure of the case 53 is formed of transparent plate (an acrylic plate, etc.). A lid portion 55 located in the upper side is connected to a sidewall with a hinge 56 and can be opened and closed. The translucent fluid 54 is a transparent liquid having the same refractive index as that of the silicone rubber three-dimensional model 41. In this Example, as the translucent fluid 54, silicone oil having an equal refractive index was used. Furthermore, by dissolving a refractive index preparation agent into water, desired translucent fluid can be obtained.

Since the three-dimensional model 41 has a spherical shape, the entire surface serves as a convex lens, so that cerebral blood vessel cavity inside cannot be visually recognized exactly. When such a three-dimensional model 41 is dipped in the translucent fluid 54, since the molding material of the three-dimensional model 41 and the translucent fluid 54 have the same refractive index, the refraction of light on the surface of the three-dimensional model 41 is disappeared, so that the lens effect on this surface is lost. Therefore, it is possible to observe the cerebral blood vessel cavity of an absolute size through the case 53. In Example, scale is printed on the observation surface of the case 53. In Fig. 6, an outer shell shape of the three-dimensional model 41 is illustrated in the case 53 for explanation, however, actually, the outer shell shape of the three-dimensional model 41 is hardly recognized visually.

In example of Fig. 6, the case 53 is provided with a retainer 61, 61 for fixing a three-dimensional model 41 and rollers 71, 73 for rotating the three-dimensional model 41. The retainer 61, 61 includes with a compression coil spring 62 and a spherical-shaped support portion 63 and presses the three-dimensional model 41 to the side of the rollers 71, 73, thereby stably stopping the three-dimensional model 41. By rotating the rollers 71, 73, the three-dimensional model 41 is rotated in the respective rotation directions. The rollers 71 and 73 are linked to rods 74, 75 and can be rotated from the outside of the case 53.

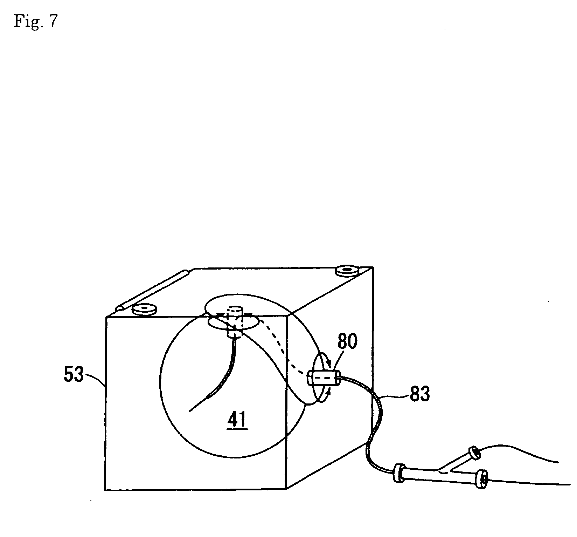

As shown in Fig. 7, the case 53 is provided with a hole 80, through which a catheter 83 can be inserted into arbitrary ends of the cerebral blood vessel cavities formed in the three-dimensional model 41.

### (Fourth Example)

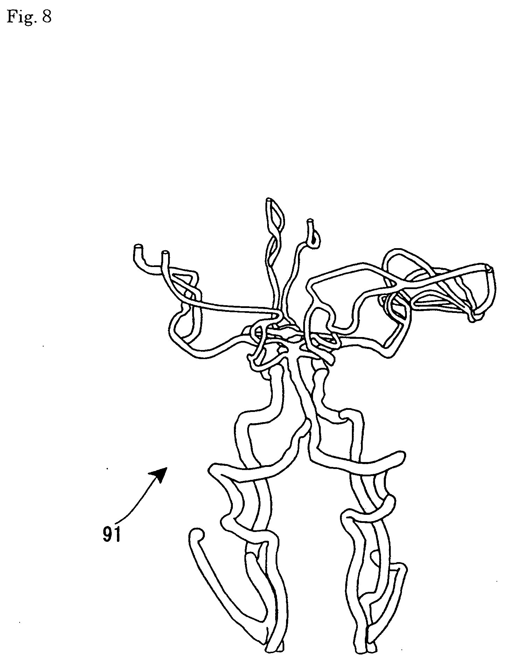

Fig. 8 shows a three-dimensional model 91 according to another Example. This three-dimensional model 91 was obtained by applying silicone rubber to the thickness of about 1 mm to the body cavity model 1 shown in Fig. 1 excluding the guide portions 3, and then removing the body cavity model in the same manner as in Example 1. In the method for applying silicone rubber, the body cavity model 1 is dipped in a silicon rubber bath, and the body cavity model 1 is taken out of the bath and dried while rotating the body cavity model 1. According to such a three-dimensional model 91, the cerebral blood vessels can be replicated more realistically, and thus trials of catheter operations can be conducted more effectively.

### (Fifth Example)

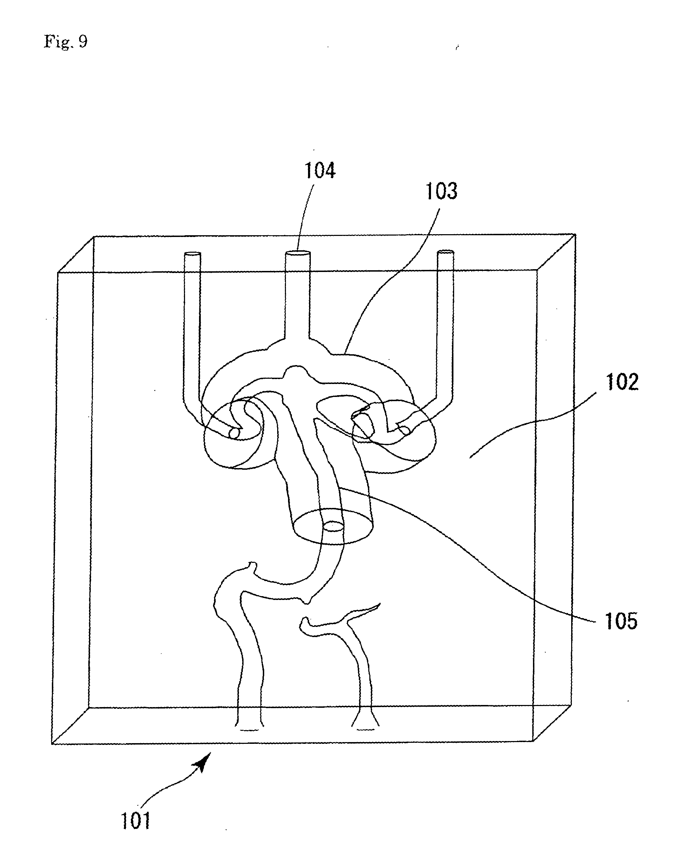

Fig. 9 shows a three-dimensional model 101 according to a further Example. This three-dimensional model 101 has a void portion (corresponding to a subarchnoid cavity) 103 in a block-shaped main body 102. In the void portion 103, a blood vessel portion 105 is formed as a membrane as shown in Fig. 8. According to the thus configured three-dimensional model 101, since an outer shell is formed in a block shape, handling is easy. Furthermore, since the blood vessel portion 105 that is required to be observed in detail is a membrane, the dynamic behavior can be reproduced more realistically and trials of catheter operations can be performed more realistically.

The three-dimensional model 101 shown in Fig. 9 can be formed as follows.

First of all, by the same method as in Fig. 8, a three-dimensional model material is formed on the periphery of the body cavity model as a membrane.

Meanwhile, a body cavity model that magnifies a blood vessel located in the void portion 103 to about three times in the three-dimensional direction, is formed as a hollow structure. Then, the above-discussed membranous three-dimensional model (in which the body cavity model exists as a core material) is inserted therein. In this Example, the expanded body cavity model 110 is divided once and a membranous three-dimensional model 113 is set therein, and then the divided body cavity model 110 is reassembled. Fig. 9 shows dividing lines of the body cavity model 110. Then, a filler that is the same or same kind as that of the body cavity model is filled between an opening portion of the expanded body cavity model 110 and the membranous three-dimensional model 113. Such a fabricated body is set in a rectangular parallelepiped outer mold, and silicone elastomer is filled in the outer mold. After the silicone elastomer is hardened, the body cavity model material is eliminated in the same manner as in Example 1, and further, the body cavity model material diffusing into the three-dimensional model is removed. Thus, the inside of the membranous model 113 becomes hollow and a void portion 103 is formed in a portion corresponding to the body cavity model 110. Note here that protrusions 111 are formed in the body cavity model 110 and extended to the outside of the three-dimensional model. From the extended portion, the body cavity model material can be discharged.

In this Example, the body cavity model 110 corresponding to the void portion 103 was formed by expanding the blood vessel portion 105. From the viewpoint that the void portion 103 enhance the freedom of the dynamic behavior of the blood vessel portion 105, the shape of the void portion 103 is not particularly limited. Therefore, the shape of the void portion 103 can be simplified. For example, the shape may be spherical, oval, etc. As a result, the body cavity model 110 can be designed in a shape capable of being divided and reassembled easily, thus facilitating production of the three-dimensional model 101 of the present invention. Furthermore, the body cavity model 110 can be molded by using the membranous three-dimensional model 113 as a core. Furthermore, the three-dimensional shape of the subarchnoid space may be formed based on the tomographic data, and then from the three-dimensional shape, a body cavity model may be formed. Furthermore, readymade standard subarchnoid space can be prepared and used as a body cavity model.

Note here that it is preferable that a transparent liquid such as water can be filled in the void portion 103. It is advantageous because when any transparent liquid are not filled in the void portion 103, light reflects diffusely by a peripheral wall of the void portion 103, making it impossible to visually recognize the blood vessel portion 105 inside of the void portion 103. In order to enhance the visual recognition of blood vessel portions, it is preferable that the void portion 103 is filled with silicone oil having substantially an equal refractive index to that of the three-dimensional model molding material. From the opening portion 104 from which materials of the body cavity model 110 are discharged, a transparent liquid can be infused into the void portion 103. By mixing a refractive index preparation agent with water, a transparent liquid that is said to have substantially the same refractive index as that of the molding material of the three-dimensional model can be used.

By filling a liquid such as silicone oil into the void portion 103, the void portion 103 approximates to a realistic subarchnoid space and realistic dynamic behavior of the blood vessel portion can be provided and at the same time, trials of catheter operations can be carried out more realistically.

The present invention is not limited to the description of the above embodiments. A variety of modifications, which are within the scopes of the following claims and which are achieved easily by a person skilled in the art, are included in the present invention.

## Claims

1. A production method of a three-dimensional model, the method comprising the steps of:
laminate shaping a body cavity model such as blood vessels model based on tomogram data of a subject;
surrounding the peripheries of the body cavity model by a three-dimensional model molding material and hardening the three-dimensional model molding material; and
removing the body cavity model.

2. The production method according to claim 1, wherein the step of removing the body cavity model comprises dissolving the body cavity model in a solvent; melting the body cavity model by heat; or combination of dissolving the body cavity model in a solvent and melting the body cavity model by heat.

3. The production method according to claim 1, wherein the three-dimensional model molding material is formed on a part or entire of the body cavity model as a thin membrane.

4. The production method according to claim 1, further comprising a step of smoothing a surface of the body cavity model.

5. The production method according to claim 1, further comprising a step of removing diffusion in which the body cavity model materials diffusing in the three-dimensional model molding material during or after removing the body cavity model is removed.

6. The production method according to claim 5, wherein the step of removing diffusion is carried out by heating.

7. The production method according to claim 1, wherein the step of laminate shaping the body cavity model is carried out by scanning on a powdery shaping material with laser; ejecting or dropping the shaping material from a nozzle, or extruding the shaping material from the nozzle.

8. The production method according to claim 1, further comprising a step of forming a sign indicating, based on the tomogram data of a subject, living body information of the subject and/or specific information of the tomogram data.

9. The production method according to claim 8, wherein together with the body cavity model, the sign is surrounded by the three-dimensional model molding material and the sign is remained in the three-dimensional model.

10. The production method according to claim 1, wherein the body cavity model is surrounded by the three-dimensional model molding material so that the body cavity model is extended out, and the portion where the body cavity model is extended out is dipped in a solvent to melt and remove the body cavity model.

11. A three-dimensional model comprising a cavity made of a translucent material and replicating body cavities such as blood vessels formed based on tomogram data of a subject.

12. The three-dimensional model according to claim 11, wherein a sign displaying living body information of the subject is further provided.

13. The three-dimensional model according to claim 12, wherein the living body information is obtained by analyzing the tomogram data.

14. The three-dimensional model according to claim 13, wherein the living body information indicates an orientation of the subject.

15. The three-dimensional model according to claim 12, wherein the living body information comprises character information, and the tomogram data specific information comprises a name of a person subjected to tomography, a hospital name, date of tomography and/or conditions for tomography, and the like.

16. The three-dimensional model according to claim 11, wherein the translucent material is formed as a membrane.

17. The three-dimensional model according to claim 11, wherein the translucent material has a portion formed as a membrane and a portion formed as a solid state.

18. The three-dimensional model according to claim 17, wherein the portion formed as a membrane is located in a void portion of the portion formed as a solid state.

19. The three-dimensional model according to claim 18, wherein translucent liquid is filled in the void portion.

20. The three-dimensional model according to claim 19, wherein the liquid has substantially an equal refractive index to that of the translucent material.

21. The three-dimensional model according to claim 18, wherein a filling opening for filling a liquid into the void portion is formed.

22. A medical model comprising a translucent fluid having substantially an equal refractive index to that of the material of the three-dimensional model according to claim 11, wherein the three-dimensional model is dipped in the fluid.

23. The medical model according to claim 22, wherein a case for the translucent fluid is further provided, and a device for fixing the three-dimensional model to the case is provided.

24. The medical model according to claim 23, wherein a device for moving the three-dimensional model is provided.

25. The medical model according to claim 22, wherein the three-dimensional model has a spherical shape.

26. The medical mode according to claim 22, wherein the fluid has a different color from the color of the three-dimensional model.
